# FASCICULE DE BREVET EUROPEEN

(11) **EP 1 439 906 B1**
(45) Date de publication et mention de la délivrance du brevet: **02.05.2012**
(21) Numéro de dépôt: 02774720.3
(22) Date de dépôt: 16.10.2002
(51) Int. Cl.: B01J 20/04, B01D 53/28, B01J 20/28

(54) **MASSE DESSICATIVE, PROCEDE POUR SON OBTENTION ET SON UTILISATION**
TROCKNUNGSMITTEL, VERFAHREN ZU DESSEN HERSTELLUNG UND DESSEN VERWENDUNG
DESICCANT MASS, METHOD FOR OBTAINING SAME AND USE THEREOF

(30) Priorité: 19.10.2001 FR 0113626
(43) Date de publication de la demande: 28.07.2004
(73) Titulaire: SOLVAY SA, 1120 Brussels (BE)
(72) Inventeur: BLONDEL, Jean-Marie, F-54000 NANCY (FR)
(74) Mandataire: Jacques, Philippe
(86) Numéro de dépôt international: PCT/EP2002/011602
(87) Numéro de publication internationale: WO 2003/035247

(56) Documents cités:
- US-A- 2 241 600
- US-A- 4 615 823
- DATABASE WPI Section Ch, Week 198840 Derwent Publications Ltd., London, GB; Class E33, AN 1988-281367 XP002204797 & JP 63 205122 A (KAKEN PHARM CO LTD), 24 août 1988 (1988-08-24)
- DATABASE WPI Section Ch, Week 198506 Derwent Publications Ltd., London, GB; Class A88, AN 1985-034908 XP002204798 & JP 59 228935 A (TOHO BESLON CO LTD), 22 décembre 1984 (1984-12-22)
- DATABASE WPI Section Ch, Week 198907 Derwent Publications Ltd., London, GB; Class D13, AN 1989-049213 XP002204799 & JP 01 004218 A (ONODA CEMENT CO LTD), 9 janvier 1989 (1989-01-09)
- DATABASE WPI Section Ch, Week 199204 Derwent Publications Ltd., London, GB; Class A14, AN 1992-028933 XP002204800 & JP 03 275731 A (NIPPON VILENE KK), 6 décembre 1991 (1991-12-06)
- DATABASE WPI Section Ch, Week 198005 Derwent Publications Ltd., London, GB; Class G04, AN 1980-08128C XP002204801 & JP 54 158390 A (ANZAI K), 14 décembre 1979 (1979-12-14)
- DATABASE WPI Section Ch, Week 199003 Derwent Publications Ltd., London, GB; Class A97, AN 1990-019415 XP002204802 & JP 01 299624 A (JAPAN EXLAN CO LTD), 4 décembre 1989 (1989-12-04)
- DATABASE WPI Section Ch, Week 198307 Derwent Publications Ltd., London, GB; Class E37, AN 1983-16330K XP002204805 & JP 58 003638 A (FREUND SANGYO KK), 10 janvier 1983 (1983-01-10)

## Description

L'invention concerne des masses dessicatives à base d'un ou plusieurs halogénures de métal alcalin ou alcalino-terreux, en particulier de chlorure de calcium, destinées notamment à l'absorption de vapeur d'eau.

Des halogénures de métal alcalin ou alcalino-terreux, tels que le chlorure de lithium et le chlorure de calcium, sont déjà connus comme agents dessicatifs. Leur capacité d'absorption d'eau est toutefois limitée, et en particulier celle du chlorure de calcium. En effet, le chlorure de calcium, qui est le plus souvent utilisé sous sa forme dihydratée (CaCl₂.2H₂O), absorbe de l'eau pour être transformé en CaCl₂.6H₂O qui se dissout dans son eau de cristallisation et donne ainsi une solution. Celle-ci s'écoule en général dans un récipient disposé sous la réserve de CaCl₂.2H₂O solide. Par conséquent, le chlorure de calcium n'est efficace que jusqu'à ce que la totalité de la masse disposée soit dissoute, après quoi, la solution récupérée dans le récipient est éliminée.

Il a déjà été proposé, afin de résoudre ce problème, de mélanger aux halogénures des matières poreuses. Par exemple, dans le brevet FR 845760, on mélange le chlorure de calcium avec de la terre d'infusoires, du charbon de bois ou de la magnésie légère pour obtenir un produit plus efficace que le chlorure de calcium pur. Dans la demande internationale WO 99/12641, on imprègne un support poreux tel que de la silice avec un chlorure hygroscopique, le support se présentant de préférence sous forme de particules sphériques ayant une résistance mécanique élevée. D'autres dessicants sont connus de JP 19870035459 et US-A-4615823.

La présente invention vise à fournir une solution alternative au problème précité de suintement en fournissant une masse dessicative nouvelle qui permet d'obtenir une capacité d'absorption élevée tout en conservant l'eau ou l'humidité piégée dans sa masse.

A cet effet, l'invention concerne une masse dessicative comprenant un mélange de fibres libres et d'au moins un halogénure de métal alcalin ou alcalino-terreux, telle que définie dans le libellé de la revendication 1, le procédé de préparation de la revendication 12 et l'utilisation de la revendication 15.

D'autres caractéristiques de l'invention sont définies dans les libellés des revendications dépendantes 2-11 et 13, 14. Une des caractéristiques essentielles de la présente invention réside dans le fait que l'halogénure soit mélangé à des fibres libres de cellulose pour former une masse dessicative. Ceci a pour effet d'augmenter la capacité d'absorption de l'halogénure, c'est-à-dire de pouvoir absorber une quantité d'eau plus élevée par rapport à l'halogénure pur. Sans vouloir être liée par une explication théorique, la demanderesse pense que ceci est dû au fait que l'eau absorbée est conservée dans la masse dessicative (sans que celle-ci ne suinte) de manière à ce que l'on puisse absorber de l'eau d'abord jusqu'à la formation de CaCl₂.6H₂O, dans le cas du chlorure de calcium, et de sa solution comme décrit plus haut, mais aussi au-delà, à savoir jusqu'à ce que cette solution soit en équilibre thermodynamique avec la tension de vapeur dans l'atmosphère ambiante.

Un autre avantage des masses dessicatives selon l'invention réside dans le fait qu'elles possèdent la propriété toute particulière de pouvoir être régénérées facilement par simple chauffage à basse température (par exemple de 100 à 180°C et de préférence de 120 à 150°C). Ces températures sont en général fonction des propriétés physiques des fibres utilisées.

Encore un autre avantage consiste à ce qu'un lit de la masse dessiccative ne se délite pas, qu'il reste de structure aérée, ce qui permet à celui-ci d'assurer une grandie surface de contact entre l'atmosphère à déshumidifier et la masse dessiccative et de pouvoir traverser le lit par un flux forcé d'air à déshydrater.

Par « dessicatif » on entend désigner « capable d'absorber des liquides et en particulier de la vapeur d'eau présente dans une atmosphère ambiante ». Les liquides en question peuvent varier dans une large mesure. Il peut par exemple s'agir des mictions d'animaux ou des condensations locales.

Par « fibres » on entend désigner tout élément filamenteux allongé constitutif d'un fil présentant de préférence un rapport longueur / largeur d'au moins 10, en particulier d'au moins 100. Par « libres » on entend désigner des fibres non liées entre elles au moment de la formulation de la masse dessiccative.

Les fibres libres utilisées dans la présente invention sont des fibres de cellulose. Celles-ci peuvent éventuellement comprendre des fibres cellulosiques recueillies du recyclage par défibrage de vieux papiers ou cartons. En variante, elles peuvent être exclusivement constituées de cellulose recueillie du recyclage par défibrage de vieux papiers ou cartons.

La quantité de fibres libres dans la masse dessicative selon l'invention doit être suffisante pour permettre de conserver au moins une partie de l'eau absorbée par l'halogénure dans la masse. Elle va dès lors dépendre de la nature et des dimensions des fibres libres, de la nature de l'halogénure et de la capacité d'absorption souhaitée. La quantité de fibres libres est couramment supérieure ou égale à 5 % en poids, par exemple supérieure ou égale à 10 % en poids, les quantités supérieures ou égales à 15 % en poids étant les plus courantes. La quantité est généralement inférieure ou égale à 95 % en poids, en particulier inférieure ou égale à 90 % en poids, les quantités inférieures ou égales à 50 % en poids étant recommandées.

Les fibres libres utilisées dans la présente invention présentent avantageusement une surface spécifique, mesurée par la méthode appelée « aire BET » selon la norme NFX 11-621 (1975), supérieure ou égale à 1 m²/g, en particulier supérieure ou égale à 5 m²/g, les valeurs supérieures ou égales à 10 m²/g étant les plus courantes. La surface spécifique des fibres libres est habituellement inférieure à 200 m²/g, plus spécialement inférieure ou égale à 100 m²/g, les valeurs inférieures ou égales à 50 m²/g étant recommandées.

L'halogénure utilisé dans la présente invention peut, par exemple, être choisi parmi les fluorures, les chlorures et les bromures. Les chlorures sont préférés. Le métal alcalin ou alcalino-terreux est en général choisi parmi le lithium, le sodium, le potassium, le magnésium et le calcium. Le calcium et le lithium sont préférés. Les halogénures de métal alcalin ou alcalino-terreux qui conviennent bien sont le chlorure de calcium et le chlorure de lithium. Le chlorure de calcium est tout particulièrement préféré.

La quantité totale d'halogénure de métal alcalin ou alcalino-terreux dans là masse dessicative selon l'invention va dépendre de la nature de l'halogénure, de la nature et des dimensions des fibres libres et de la capacité d'absorption souhaitée. Elle est en général supérieure ou égale à 4 % en poids, en particulier supérieure ou égale à 6 % en poids, les quantités supérieures ou égales à 7 % étant les plus courantes. La quantité est habituellement inférieure ou égale à 95 % en poids, le plus souvent inférieure ou égale à 90 % en poids, les quantités inférieures ou égales à 50 % en poids donnant de bons résultats. Dans certains cas, des quantités inférieures ou égales à 13 % en poids donnent d'excellents résultats, par exemple des quantités inférieures ou égales à 10 % en poids.

La masse dessicative de l'invention comprend en outre au moins un composé calcique essentiellement différent de l'halogénure de métal alcalin ou alcalino-terreux choisi parmi le carbonate de calcium, le sulfate de calcium et l'hydroxyde de calcium. Le carbonate de calcium et le sulfate de calcium sont préférés, spécialement le carbonate de calcium. Le calcaire broyé convient bien. On entend par « essentiellement différent », contenant moins de 10 % en poids (de préférence moins de 5 % en poids) d'halogénure de métal alcalin ou alcalino-terreux.

Le composé calcique peut être un résidu solide de la distillation d'une eau mère résiduaire d'une soudière à l'ammoniaque. Ce résidu peut être mis en oeuvre sous forme d'une suspension plus ou moins concentrée. Cette concentration peut varier de 10 à 90 % massiques de matières sèches. Des concentrations en matières sèches de 50 à 70 % conviennent bien, une concentration de 65 % étant à préférer. On entend par « résidu solide de la distillation d'une eau mère d'une soudière à l'ammoniaque », un résidu solide que l'on a séparé d'une suspension aqueuse provenant d'une colonne de distillation de l'eau mère de la fabrication de carbonate de sodium par le procédé à l'ammoniaque. Des exemples de constitution d'une telle suspension aqueuse sont fournis dans le traité Te-Pang Hou, « Manufacture of soda », seconde édition, Hafner Publishing Company, 1969, page 237.

De tels résidus solides comprennent, comme constituants principaux, du carbonate de calcium, du sulfate de calcium et de l'hydroxyde de calcium. En plus de ces constituants, ils contiennent souvent, comme impuretés, des composés du magnésium, des oxydes de fer, de l'alumine, de la silice, du chlorure de sodium et du chlorure de calcium. Les teneurs en ces divers constituants dépendent de l'origine des matières premières utilisées dans le procédé à l'ammoniaque de fabrication du carbonate de sodium, ainsi que des paramètres de fonctionnement de ce procédé.

Des résidus solides convenant bien pour cette forme de réalisation préférée de l'invention comprennent au moins 25 % (de préférence au moins 40 %) en poids de carbonate de calcium, au moins 0 % (de préférence au moins 1 %) en poids d'hydroxyde de calcium et au moins 0 % (de préférence au moins 1 %) en poids de sulfate de calcium. De préférence, les teneurs pondérales maximum du résidu solide en ces trois constituants n'excèdent pas respectivement 99 % (de préférence 80 %) dans le cas du carbonate de calcium, 25 % (de préférence 15 %) dans le cas de l'hydroxyde de calcium et 50 % (de préférence 35 %) dans le cas du sulfate de calcium. Des résidus solides spécialement recommandés contiennent de 45 à 70 % (avantageusement de 50 à 60 %) en poids de carbonate de calcium, de 5 à 15 % (avantageusement de 5 à 8 %) en poids d'hydroxyde de calcium, de 15 à 35 % (avantageusement de 20 à 30 %) en poids de sulfate de calcium et, éventuellement, jusqu'à 10 % (généralement de 1 à 10 %) en poids d'impuretés (Silice + CaCl₂ + NaCl). Au besoin, on peut soumettre un résidu solide industriel à un procédé d'enrichissement pour atteindre ces teneurs optimum.

La quantité totale de composé calcique dans la masse dessicative selon la forme de réalisation préférée de l'invention est généralement supérieure à 0 % en poids, en particulier supérieure ou égale à 10 % en poids, les quantités supérieures ou égales à 20 % en poids étant courantes. La quantité est habituellement inférieure ou égale à 90 % en poids, plus spécialement inférieure ou égale à 80 % en poids, les quantités inférieures ou égales à 75 % en poids donnant de bons résultats.

Les masses dessicatives conformes à cette forme de réalisation préférée de l'invention présentent une très bonne capacité d'absorption d'eau, ne relarguent pas de solution en dehors de la masse dessiccative et ne se délitent pas. Elles conviennent spécialement bien pour déshumidifier l'air l'ambiant. Elles constituent par ailleurs un moyen de valoriser un déchet industriel, ce qui constitue un avantage à la fois économique et environnemental.

La masse dessicative selon l'invention présente généralement un poids spécifique apparent, mesuré par la norme NF T 73 405 (1975), supérieure ou égale à 0,2 kg/l, en particulier supérieure ou égale à 0,3 kg/l, les valeurs supérieures ou égales à 0,35 kg/l étant recommandées. Le poids spécifique apparent est le plus souvent inférieur ou égal à 0,6 kg/l, plus spécialement inférieur ou égal à 0,5 kg/l, les valeurs inférieures ou égales à 0,45 kg/l étant les plus avantageuses.

La masse dessicative selon l'invention peut être obtenue par tout moyen connu adéquat. Elle peut par exemple être préparée par simple mélange à sec des constituants. Dans une variante préférée, on mélange les fibres libres avec l'halogénure de métal alcalin ou alcalino-terreux et, le cas échéant, avec le composé calcique essentiellement différent de l'halogénure de métal alcalin ou alcalino-terreux, en présence d'une quantité d'eau suffisante pour permettre l'obtention d'une masse extrudable, puis on extrude cette masse extrudable pour obtenir une masse extrudée et on sèche cette masse extrudée.

L'invention concerne dès lors également un procédé de fabrication d'une masse dessicative conforme à l'invention, tel que définit dans le libellé de la revendication indépendante 12, selon lequel on mélange des fibres libres avec au moins un halogénure de métal alcalin ou alcalino-terreux et, avec au moins un composé calcique essentiellement différent de l'halogénure de métal alcalin ou alcalino-terreux, en présence d'une quantité d'eau suffisante pour permettre l'obtention d'une masse extrudable, puis on extrude cette masse extrudable pour obtenir une masse extrudée et on sèche cette masse extrudée.

Dans le procédé selon l'invention, le mélange peut être effectué dans tout type de mélangeur adéquat, comme par exemple un mélangeur planétaire discontinu ou un mélangeur continu à rubans ou à socs de charrue. La quantité d'eau dans le mélange est généralement supérieure ou égale à 10 % en poids, en particulier supérieure ou égale à 30 % en poids. Elle est le plus souvent inférieure ou égale à 60 % en poids, en particulier inférieure ou égale à 45 % en poids.

Dans le procédé selon l'invention, l'extrusion est souvent réalisée à une température ambiante. Des extrudeuses continues type presses à granuler sont particulièrement adaptées à ce type de formulation. En général, a la sortie de l'extrudeuse, des granulés se forment naturellement. Ils peuvent être divisés par l'utilisation d'un couteau agissant contre la filière de l'extrudeuse si ceux-ci ne se rompent pas naturellement. Ces granules présentent généralement un diamètre moyen supérieur ou égal à 0.5 mm, en particulier supérieur ou égal à 2. Le diamètre moyen des granules est habituellement inférieur ou égal à 20 mm, en particulier inférieur ou égal à 10 mm.

Dans le procédé selon l'invention, le séchage consiste à chauffer la masse extrudée, le cas échéant sous forme de granules, pour éliminer au moins une partie de l'eau présente. Ceci peut être réalisé dans un séchoir de type séchoir à bande. La température de séchage est en général de 100 à 250 °C, de préférence de 120 à 180 °C. A l'issue du séchage la masse contient généralement de l'eau en une quantité inférieure à 10 % en poids, de préférence inférieure à 5 % en poids.

Après séchage, les granulés peuvent être légèrement émiettés et broyés. Cette opération a pour but de libérer les tensions créées lors du séchage et d'ouvrir la structure poreuse de la masse absorbante.

La masse dessicative selon l'invention trouve indifféremment des applications dans l'industrie et des applications domestiques. Dans l'industrie, elle peut notamment servir à contrôler le degré d'humidité dans des pièces ou des ateliers ou à accompagner des chargements de grosses quantités afin d'éviter toute reprise d'humidité lors du transport ou à assurer toute ou partie de la déshydratation d'air destiné à des instruments de mesure.

La masse dessiccative peut être mise en oeuvre dans des pièces ou des espaces clos à déshumidifier. Elle peut être traversée par un flux forcé d'air à déshumidifier, ce qui permet de réaliser une déshumidification contrôlée grâce à l'utilisation d'un appareil qui assure un flux d'air contrôlé à travers le lit de masse dessiccative. Cette propriété peut être utilisée dans une chaîne d'air conditionné. La masse dessiccative peut être répandu au pieds de murs sujets à des remontées capillaires d'humidité. De par sa proximité du mur et son efficacité, elle évite ces remontées d'humidité.

La masse dessiccative selon d'invention trouve également des applications dans le domaine agricole. Dans ce domaine, en plus des propriétés dessiccatives décrites dans les autres applications, on peut utiliser la masse dessiccative comme une masse absorbante destinée à assainir les aires de stabulation des animaux. Plus particulièrement, un usage intéressant est d'adjoindre la masse dessiccative aux litières paillées ou minérales afin de pomper la phase aqueuse, issues des mictions et de la condensation ainsi que des fèces, présente en permanence dans celle-ci. Cette utilisation peut éviter la prolifération de maladies véhiculées par la phase aqueuse.

L'invention concerne dès lors également l'utilisation telle que définie dans le libellé de la revendication indépendante 15 de la masse dessicative selon l'invention pour la déshydratation de locaux humides, le contrôle d'humidité dans un flux d'air forcé ou dans la chaîne de climatisation d'une pièce ou d'un immeuble, la lutte contre la remontée capillaire d'humidité dans les murs des immeubles ou des habitations privées, la déshydratation des conteneurs de transport, la déshydratation de placards, le contrôle d'humidité dans des emballages, l'élimination de condensations dans des locaux industriels, agricoles ou privés, et comme asséchant de litières minérales ou paillées dans le domaine agricole.

Dans les essais dont la description suit, on a utilisé, à titre de composé calcique, une boue provenant de la distillation d'une eau mère de la fabrication de carbonate de sodium par le procédé à l'ammoniaque. La composition de la boue est mentionnée au tableau 1 ci-dessous. Dans les exemples ci-dessous, les % sont des % massiques calculés sur la masse dessiccative finale.

**Tableau 1**

| **Composants** | **Teneur pondérale (% de matière sèche)** |
|---|---|
| CaCO₃ | 60 ± 20 % |
| Ca(OH)₂ | 0-15 % |
| CaSO₄ | 40 ± 20% |
| CaCl₂ | 0-5% |
| NaCl | 0-5% |
| Silice | 0-10 % |
| Eau | 330 g/kg de boue |

### Exemple 1

Avec un composé calcique conforme aux spécifications ci-dessus une masse dessicative a été réalisée avec :
- 69 % de composé calcique
- 23 % de fibres issues de pâte à papier recyclé (surface spécifique =13 m²/g)
- 8% de CaCl₂
- Capacité théorique d'absorption d'eau de la masse : 75 %

Sous une atmosphère contrôlée dans les conditions suivantes :
- Température : 23°C
- Humidité relative : 90 %
- Concentration en CaCl₂ maximale dans une solution aqueuse en équilibre thermodynamique avec l'atmosphère ambiant : 120 g/kg de solution
- 10 grammes d'échantillons placés dans une coupelle ouverte

Les performances suivantes ont été obtenues :
- % d'eau absorbée à l'équilibre après 168 heures : 73 %
- Pas de suintement détectable de la masse absorbante
- Concentration en CaCl₂ dans la solution contenue dans la masse dessiccative : 120 g/kg

### - Exemple 2

Avec un composé calcique conforme aux spécifications ci-dessus une masse dessicative a été réalisée avec :
- 68 % de composé calcique
- 23 % de fibres issues de pâte à papier recyclé (surface spécifique =13 m²/g)
- 9% de CaCl₂
- Capacité théorique d'absorption d'eau de la masse : 74 %

Sous une atmosphère contrôlée dans les conditions suivantes :
- Température : 23°C
- Humidité relative : 90 %
- Concentration en CaCl₂ maximale dans une solution aqueuse en équilibre thermodynamique avec l'atmosphère ambiant : 120 g/kg de solution
- 10 grammes d'échantillons placés dans une coupelle ouverte

Les performances suivantes ont été obtenues :
- % d'eau absorbée à l'équilibre après 197 heures : 78 %
- Suintements détectables de la masse absorbante après 192 heures % d'eau absorbée équivalente : 77 %.
- Concentration en CaCl₂ dans la solution contenue dans la masse dessiccative à la fin de l'essai : 120 g/kg.

### Exemple 3

Avec un composé calcique conforme aux spécifications ci-dessus une masse dessicative a été réalisée avec :
- 60 % de composé calcique
- 20 % de fibres issues de pâte à papier recyclé (surface spécifique =13 m²/g)
- 20 % de CaCl₂
- Capacité théorique d'absorption d'eau de la masse : 58 %

Sous une atmosphère contrôlée dans les conditions suivantes :
- Température : 23°C
- Humidité relative : 90 %
- Concentration en CaCl₂ maximale dans une solution aqueuse en équilibre thermodynamique avec l'atmosphère ambiant : 120 g/kg de solution
- 10 grammes d'échantillons placés dans une coupelle ouverte

Les performances suivantes ont été obtenues :
- % d'eau absorbée à l'équilibre après 6 heures : 46 %
- Suintements détectables de la masse absorbante après 168 heures % d'eau absorbée équivalente : 208 %.
- Concentration en CaCl₂ dans la solution contenue dans la masse dessiccative à la fin de l'essai : 120 g/kg.

## Revendications

1. Masse dessicative comprenant un mélange de fibres libres de cellulose et d'au moins un halogénure de métal alcalin ou alcalino-terreux, comprenant en outre au moins un composé calcique essentiellement différent de l'halogénure de métal alcalin ou alcalino-terreux choisi parmi le carbonate de calcium, le sulfate de calcium et l'hydroxyde de calcium.

2. Masse dessicative selon la revendication 1, dans laquelle l'halogénure de métal alcalin ou alcalino-terreux est le chlorure de calcium.

3. Masse dessicative selon la revendication 1 ou 2, dans laquelle la quantité totale d'halogénure de métal alcalin ou alcalino-terreux est supérieure ou égale à 4 % en poids et inférieure ou égale à 50 % en poids.

4. Masse dessicative selon l'une quelconque des revendications 1 à 3, dans laquelle les fibres libres de cellulose sont constituées de cellulose recueillie du recyclage par défibrage de vieux papiers ou cartons.

5. Masse dessicative selon l'une quelconque des revendications 1 à 4, dans laquelle la quantité de fibres libres est supérieure ou égale à 5 % en poids et inférieure ou égale à 94 % en poids.

6. Masse dessicative selon l'une quelconque des revendications 1 à 5, dans laquelle le composé calcique est du calcaire broyé.

7. Masse dessicative selon l'une quelconque des revendications 1 à 6, dans laquelle le composé calcique est un résidu solide de la distillation d'une eau mère résiduaire d'une soudière à l'ammoniaque.

8. Masse dessicative selon l'une quelconque des revendications 1 à 7, dans laquelle la quantité totale de composé calcique est supérieure à 0 % en poids et inférieure ou égale à 90 % en poids.

9. Masse dessicative selon l'une quelconque des revendications 1 à 8, dans laquelle la quantité de fibres libres est inférieure ou égale à 50 % en poids.

10. Masse dessicative selon l'une quelconque des revendications 1 à 9, dans laquelle le ratio longueur sur diamètre des fibres libres est d'au moins 10.

11. Masse dessicative selon l'une quelconque des revendications 1 à 10, présentant un poids spécifique apparent supérieur ou égal à 0.2 kg/l et inférieur ou égal à 0.5 kg/l.

12. Procédé de fabrication d'une masse dessicative conforme à l'une quelconque des revendications 1 à 11, selon lequel on mélange des fibres libres avec au moins un halogénure de métal alcalin ou alcalino-terreux et, avec au moins un composé calcique essentiellement différent de l'halogénure de métal alcalin ou alcalino-terreux, en présence d'une quantité d'eau suffisante pour permettre l'obtention d'une masse extrudable, puis on extrude cette masse extrudable pour obtenir une masse extrudée et on sèche cette masse extrudée.

13. Procédé de fabrication d'une masse dessicative selon la revendication 12, selon lequel la quantité d'eau dans la masse extrudable est supérieure ou égale à 10 % en poids et inférieure ou égale à 60 % en poids avant séchage, et dans lequel la quantité d'eau dans la masse extrudée et séchée est inférieure à 10 % en poids.

14. Procédé de fabrication d'une masse dessicative selon la revendication 12 ou 13, selon lequel on extrude la masse extrudable sous forme de granules présentant un diamètre moyen supérieur ou égal à 0.5 mm et inférieur ou égal à 20 mm.

15. Utilisation d'une masse dessicative conforme à l'une quelconque des revendications 1 à 11 pour la déshydratation de locaux humides, le contrôle d'humidité dans un flux d'air forcé ou dans la chaîne de climatisation d'une pièce ou d'un immeuble, la lutte contre la remontée capillaire d'humidité dans les murs des immeubles ou des habitations privées, la déshydratation de conteneurs de transport, la déshydratation de placards, le contrôle d'humidité dans des emballages, l'élimination de condensations dans des locaux industriels, agricoles ou privés, et comme asséchant de litières minérales ou paillées dans le domaine agricole.

## Claims

1. Desiccant material comprising a mixture of free fibres of cellulose and at least one alkali metal or alkaline earth metal halide, further comprising at least one calcic compound essentially different from the alkali metal or alkaline earth metal halide selected among calcium carbonate, calcium sulphate and calcium hydroxide.

2. Desiccant material according to Claim 1, wherein the alkali metal or alkaline earth metal halide is calcium chloride.

3. Desiccant material according to Claim 1 or 2, wherein the total amount of alkali metal or alkaline earth metal halide is greater than or equal to 4 % by weight and less than or equal to 50 % by weight.

4. Desiccant material according to any one of Claims 1 to 3, wherein the free fibres are composed of cellulose recovered from the recycling of wastepaper or cardboard by defiberizing.

5. Desiccant material according to any one of Claims 1 to 4, wherein the amount of free fibres is greater than or equal to 5 % by weight and less than or equal to 94 % by weight.

6. Desiccant material according to any one of Claims 1 to 5, wherein the calcic compound is ground limestone.

7. Desiccant material according to Claim 6, wherein the calcic compound is selected from ground limestone and the solid residues from the distillation of a residual mother liquor from an ammonia-soda plant.

8. Desiccant material according to Claim 6 or 7, wherein the total amount of calcic compound is greater than 0 % by weight and less than or equal to 90 % by weight.

9. Desiccant material according to any one of Claim 1 to 8, wherein the amount of free fibres is less than or equal to 50 % by weight.

10. Desiccant material according to any one of Claim 1 to 9, wherein the length/width ratio of the free fibres is at least 10.

11. Desiccant material according to any one of Claim 1 to 10, having an apparent specific weight greater than or equal to 0.2 kg/l and less than or equal to 0.5 kg/l.

12. Process for preparing a desiccant material in accordance with any one of Claims 1 to 11, whereby free fibres are mixed with at least one alkali metal or alkaline earth metal halide, and, where appropriate, with at least one calcic compound essentially different from the alkali metal or alkaline earth metal halide, in the presence of an amount of water sufficient to allow an extrudable material to be obtained, and then this extrudable material is extruded to give an extruded material, and this extruded material is dried.

13. Process for preparing a desiccant material in accordance with Claim 12, whereby the amount of water in the extrudable material is greater than or equal to 10 % by weight and less than or equal to 60 % by weight before drying, and whereby the amount of water in the extrudable material after drying is less than 10 % by weight.

14. Process for preparing a desiccant material in accordance with Claims 12 or 13, whereby the extrudable material is extruded into pellets having a mean diameter of greater than or equal to 0.5 mm and less than or equal to 20 mm.

15. Use of a desiccant material in accordance with any one of Claims 1 to 11 for dehydrating damp premises, controlling humidity in a forced flow of air or in the air-conditioning line of a room or a building, combating rising damp in the walls of buildings or of private dwellings, dehydrating transport containers, dehydrating cupboards, controlling humidity in packaging, removing condensation in industrial, agricultural or private premises, and as a drying agent for mineral or straw-based litters in the agricultural sector.

## Patentansprüche

1. Trocknend wirkende Masse, die eine Mischung aus freien Cellulosefasern und mindestens einem Alkali- oder Erdalkalimetallhalogenid umfasst, wobei sie darüber hinaus mindestens eine Calciumverbindung umfasst, die sich wesentlich von dem Alkali- oder Erdalkalimetallhalogenid unterscheidet und aus Calciumcarbonat, Calciumsulfat und Calciumhydroxid ausgewählt ist.

2. Trocknend wirkende Masse nach Anspruch 1, wobei es sich bei dem Alkali- oder Erdalkalimetallhalogenid um Calciumchlorid handelt.

3. Trocknend wirkende Masse nach Anspruch 1 oder 2, wobei die Gesamtmenge an Alkali- oder Erdalkalimetallhalogenid mindestens 4 Gewichts-% und höchstens 50 Gewichts-% beträgt.

4. Trocknend wirkende Masse nach einem beliebigen der Ansprüche 1 bis 3, wobei die freien Cellulosefasern aus Cellulose bestehen, die gewonnen wird, indem Altpapier oder -pappe durch Zerfaserung wiederverwertet werden.

5. Trocknend wirkende Masse nach einem beliebigen der Ansprüche 1 bis 4, wobei die Menge an freien Fasern mindestens 5 Gewichts-% und höchstens 94 Gewichts-% beträgt.

6. Trocknend wirkende Masse nach einem beliebigen der Ansprüche 1 bis 5, wobei es sich bei der Calciumverbindung um zerkleinerten Kalk handelt.

7. Trocknend wirkende Masse nach einem beliebigen der Ansprüche 1 bis 6, wobei es sich bei der Calciumverbindung um einen feststofflichen Destillationsrückstand der restlichen Mutterlauge einer Anlage zur Gewinnung von Soda mittels einer Ammoniaklösung handelt.

8. Trocknend wirkende Masse nach einem beliebigen der Ansprüche 1 bis 7, wobei die Gesamtmenge der Calciumverbindung mehr als 0 Gewichts-% und höchstens 90 Gewichts-% beträgt.

9. Trocknend wirkende Masse nach einem beliebigen der Ansprüche 1 bis 8, wobei die Menge an freien Fasern höchstens 50 Gewichts-% beträgt.

10. Trocknend wirkende Masse nach einem beliebigen der Ansprüche 1 bis 9, wobei das Verhältnis von Länge zu Durchmesser der freien Fasern mindestens 10 beträgt.

11. Trocknend wirkende Masse nach einem beliebigen der Ansprüche 1 bis 10, wobei sie ein scheinbares spezifisches Gewicht von mindestens 0,2 kg/l und höchstens 0,5 kg/l aufweist.

12. Verfahren zur Herstellung einer trocknend wirkenden Masse gemäß einem beliebigen der Ansprüche 1 bis 11, wobei freie Fasern mit mindestens einem Alkali- oder Erdalkalimetallhalogenid und mit mindestens einer Calciumverbindung, die sich wesentlich von dem Alkali- oder Erdalkalimetallhalogenid unterscheidet, vermischt werden, in Gegenwart einer Wassermenge, die ausreicht, um eine extrudierbare Masse erhalten zu können, woraufhin diese extrudierbare Masse extrudiert wird, um eine extrudierte Masse zu erhalten, und diese extrudierte Masse getrocknet wird.

13. Verfahren zur Herstellung einer trocknend wirkenden Masse nach Anspruch 12, wobei die Menge an Wasser in der extrudierbaren Masse vor dem Trocknen mindestens 10 Gewichts-% und höchstens 60 Gewichts-% beträgt und wobei die Menge an Wasser in der extrudierten und getrockneten Masse weniger als 10 Gewichts-% beträgt.

14. Verfahren zur Herstellung einer trocknend wirkenden Masse nach Anspruch 12 oder 13, wobei die extrudierbare Masse in Form von Granulatkörnern extrudiert wird, welche einen mittleren Durchmesser von mindestens 0,5 mm und höchstens 20 mm aufweisen.

15. Verwendung einer trocknend wirkenden Masse gemäß einem beliebigen der Ansprüche 1 bis 11 zur Trocknung von feuchten Räumen, zum Einstellen der Feuchtigkeit in einem gelenkten Luftstrom oder in einer Klimaanlage eines Raumes oder eines Gebäudes, zur Bekämpfung des kapillaren Aufsteigens von Feuchtigkeit im Mauerwerk von Gebäuden oder privaten Wohnhäusern, zur Trocknung von Transportbehältern, zur Trocknung von Abstellräumen, zum Einstellen der Feuchtigkeit in Verpackungen, zum Entfernen von Kondenswasser in gewerblichen, landwirtschaftlichen oder privaten Räumen sowie als Trockenmittel in mineralischer oder strohbasierter Einstreu im landwirtschaftlichen Bereich.
